# EUROPÄISCHE PATENTSCHRIFT

(11) **EP 2 365 599 B1**
(45) Veröffentlichungstag und Bekanntmachung des Hinweises auf die Patenterteilung: **16.07.2014**
(21) Anmeldenummer: 10155828.6
(22) Anmeldetag: 08.03.2010
(51) Int. Cl.: H02J 1/10, H02J 3/38, H02M 7/48

(54) **Vorrichtung zur Wandlung elektrischer Energie und Verfahren zum Betreiben einer derartigen Vorrichtung**
Device for converting electrical energy and method for operating such a device
Dispositif de conversion d'énergie électrique et procédé de fonctionnement d'un tel dispositif

(43) Veröffentlichungstag der Anmeldung: 14.09.2011
(73) Patentinhaber: SMA Solar Technology AG, 34266 Niestetal (DE)
(72) Erfinder: Müller, Jens-Uwe, 34246 Vellmar (DE); Witsch, Peter, 34396 Liebenau (DE); Rühling, Christian, 34298 Helsa (DE); Falk, Andreas, 34131 Kassel (DE); Leifert, Torsten, 21360 Vögelsen (DE)
(74) Vertreter: Dantz, Jan Henning

(56) Entgegenhaltungen:
- EP-A1- 1 956 703
- WO-A1-2008/015461
- DE-A1- 10 216 252
- US-A- 5 764 495
- US-A1- 2005 157 522
- US-A1- 2007 221 267
- ANDERSEN G K ET AL: "A new green power inverter for fuel cells", 33RD.ANNUAL IEEE POWER ELECTRONICS SPECIALISTS CONFERENCE. PESC 2002. CONFERENCE PROCEEDINGS. CAIRNS, QUEENSLAND, AUSTRALIA, JUNE 23 - 27, 2002; [ANNUAL POWER ELECTRONICS SPECIALISTS CONFERENCE], NEW YORK, NY : IEEE, US LNKD- DOI:10.1109/PSEC.2002.10, Bd. 2, 23. Juni 2002 (2002-06-23), Seiten 727-733, XP010747467, ISBN: 978-0-7803-7262-7

## Beschreibung

Die Erfindung betrifft eine Vorrichtung nach dem Oberbegriff des Anspruchs 1. Sie dient zur Wandlung elektrischer Energie, die in einem elektrochemischen Speicher (beispielsweise in einer wiederaufladbaren Batterie) gespeichert ist und aus diesem entnommen wird oder aus einer Brennstoffzelle entnommen wird oder diesen zugeführt wird. Weiterhin betrifft die Erfindung ein Verfahren zum Betreiben derartiger Vorrichtungen.

Als gattungsgemäßer Stand der Technik wird hierzu der Artikel: ANDERSEN G K ET AL "A new green inverter for fuel cells", 33 RD ANNUAL IEEE POWER ELECTRONICS SPECIALISTS CONFERENCE PESC 2002, CONFERENCE PROCEED-INGS CAIRNS; QUEENSLAND, AUSTRALIA, JUNE 23 - 27, 2002 (ANNUAL POWER ELECTRONICS SPECIALISTS CONFERENCE), NEW YORK, N.Y.: IEEE, US LNKD- DDI:10.1109/PSEC.2002.10; Bd. 2, 23, Juni 2002 (2002-06-23); Seiten 727-733, XP010747467; ISBN: 978-0-7803-7262-7 genannt.

Zur Umwandlung von Gleichspannung aus einer Brennstoffzelle oder einem elektrochemischen Speicher in Wechselspannung - insbesondere zur Einspeisung in ein Versorgungsnetz - werden Wechselrichter verwendet, wobei üblicherweise eine galvanische Trennung zwischen Eingang und Ausgang gefordert ist.

Derartige Wechselrichter müssen für einen Betrieb in einem weiten Eingangsspannungsbereich - insbesondere in einem Eingangsspannungsbereich von 1:2 bis 1:3 - ausgelegt sein, da die beispielsweise von einer Brennstoffzelle erzeugte Gleichspannung beträchtlich variieren kann, beispielsweise zwischen 25 V und 72 V. Zudem ist es beispielsweise bei Brennstoffzellen ggf. auch notwendig, diese mit Energie zu versorgen, beispielsweise zum Start des Betriebs der Brennstoffzelle, wofür eine Gleichspannung von z.B. 24 V zuzuführen ist.

Um eine Wechselspannung von z.B. 230 V zu erzeugen, ist nach dem Stand der Technik ein dreistufiger Aufbau des Wechselrichters mit beispielsweise einem Tiefsetzsteller, einer diesem nachgeschalteten HF-Wandlerstufe und dem eigentlichen DC/AC-Wandler oder mit einer HF-Wandlerstufe, einem dieser nachgeschalteten Hochsetzsteller und dem eigentlichen DC/AC-Wandler erforderlich.

Aus der US 2007/221267 A1 ist ferner eine Vorrichtung mit einer einzigen DC/DC-Wandlerstufe zur Erzeugung einer Zwischenkreisspannung aus einer Eingangsspannung bekannt, die derart ausgelegt ist und ansteuerbar ist, dass sie Gleichspannung direkt auf eine Zwischenkreisspannung umsetzt, mit welcher eine einzige DC-/AC-Wandlerstufe zur Erzeugung der Wechselspannung betreibbar ist, wobei die DC/DC-Wandlerstufe zwei oder mehr parallel geschaltete DC/DC-Wandlereinrichtungen aufweist, die galvanisch trennend ausgeführt sind und jeweils einen Transformator aufweisen, einer Steuereinrichtung, welche die zwei oder mehr parallel geschalteten DC/DC-Wandlereinrichtungen mit Steuerparametern ansteuert, und der DC/AC-Wandlerstufe zur Erzeugung der Wechselspannung aus der Zwischenkreisspannung bekannt. Bei der Ansteuerung der parallel geschalteten Wandlereinrichtungen erfolgt auf der Basis einer Eingangsspannungsmessung ggf. ein Zu- oder Abschalten von einzelnen der Wandlereinrichtungen. Es stellt sich aber nicht das Problem des weiten Eingangsspanungsbereiches wie bei der gattungsgemäßen Vorrichtung, so dass nach wie vor der Bedarf dazu besteht, den Aufwand zur Umwandlung von Energie bei einem weiten Eingangsspannungsbereich weiter zu verringern. Die aus US 2007/221267 A1 bekannte Vorrichtung entspricht dem Oberbegriff des Anspruchs 1.

Vor diesem Hintergrund verringert die Erfindung den erforderlichen Aufwand zur Umwandlung von Energie bei einem weiten Eingangsspannungsbereich von beispielsweise 1:2 bis 1:3, wobei die Vorrichtung gleichzeitig galvanisch trennend ausgeführt sein soll.

Die Erfindung erreicht dieses Ziel durch die Vorrichtung nach Anspruch 1 und das Verfahren nach Anspruch 8.

Durch die Varianten des erfindungsgemäßen Steuerverfahrens wird es möglich, den Wechselrichter zur Erzeugung von Wechselspannung aus der Eingangsspannung auf einen zweistufigen Aufbau, insbesondere mit einer einzigen DC/DC-Wandlerstufe und der eigentlichen DC/AC-Wandlerstufe zu reduzieren.

Dabei besteht die DC/DC-Wandlerstufe aus zwei oder mehr parallel geschalteten DC/DC-Wandlereinrichtungen, deren Eingänge und Ausgänge leitend miteinander verbunden sind. Dennoch kann durch geeignete individuelle Ansteuerung der Leistungshalbleiter der zwei oder mehr parallel geschalteten DC/DC-Wandlereinrichtungen aus einem weiten Eingangsspannungsbereich von beispielsweise 25 V bis 72 V eine Netzspannung von beispielsweise mehr als 100 V, insbesondere 230 V erzeugt werden. Dabei ist es in Hinsicht auf einen optimalen Wirkungsgrad zu bevorzugen, die Zwischenkreisspannung auf die tatsächliche Netz-Spitzen-Spannung zu regeln.

Die zwei oder mehr parallel geschalteten DC/DC-Wandlereinrichtungen können alle oder zum Teil sowohl gleichartig als auch unterschiedlich dimensioniert bzw. ausgestaltet sein und in beiden Fällen sowohl gleich als auch unterschiedlich angesteuert werden. Dabei ist insbesondere auch eine unterschiedliche Ansteuerung gleich ausgelegter Wandlereinrichtungen vorgesehen, was beispielsweise dazu nutzbar ist, einen der Wandler auszuschalten, während der andere läuft. Dieses "Ausschalten" geschieht vorzugsweise dadurch, dass die Schalter bzw. Ventile des Wandlers nicht mehr angesteuert werden, also alle offen sind.

Durch die Erfindung wird in vorteilhafter Weise erreicht, dass die Anzahl der nach dem Stand der Technik in Reihe geschalteten DC/DC-Wandlerstufen einer Vorrichtung vorzugsweise auf eine einzige reduziert wird, was in der Folge zu einer Reduzierung des Hardwareaufwandes z.B. zur Ansteuerung der einzelnen DC/DC-Wandlerstufen und damit zu günstigeren Herstellungskosten führt. Weiterhin wird durch die Erfindung eine Steigerung des Wirkungsgrades der in Rede stehenden Vorrichtung ermöglicht.

Nach einer Option wird der Wechselrichter zwar um eine weitere DC/DC-Wandlerstufe ergänzt, diese weitere DC/DC-Wandlerstufe dient jedoch der Erzeugung einer Gleichspannung zur Versorgung der Brennstoffzelle, also beispielsweise zur Erzeugung einer Gleichspannung von 24 V. Hierzu wird die eigentliche DC/AC-Wandlerstufe für einen bidirektionalen Betrieb ausgelegt und es wird ggf., z. B. zum Start des Betriebs der Brennstoffzelle, aus dem Energieversorgungsnetz Wechselspannung in eine DC-Zwischenkreisspannung von z.B. 420 V umgewandelt, aus welcher dann mit der weiteren DC/DC-Wandlerstufe die Gleichspannung zur Versorgung der Brennstoffzelle erzeugt wird. Während des Betriebs der Brennstoffzelle wird die DC-Zwischenkreisspannung jedoch vorteilhafterweise durch Umwandlung der von der Brennstoffzelle erzeugten Gleichspannung erzeugt.

Weitere vorteilhafte Ausführungen der Erfindung sind in den Unteransprüchen beschrieben.

Nachfolgend wird die Erfindung unter Bezugnahme auf die beiliegenden Zeichnungen näher beschrieben. Es zeigen:
- Fig. 1a: eine schematische Darstellung einer ersten Ausführungsform einer erfindungsgemäßen Vorrichtung als Blockschaltbild,
- Fig. 1b: eine schematische Darstellung einer zweiten Ausführungsform einer erfindungsgemäßen Vorrichtung als Blockschaltbild,
- Fig. 2a: eine schematische Darstellung einer DC/DC-Wandlerstufe als Blockschaltbild,
- Fig. 2b: eine schematische Darstellung einer DC/DC-Wandlerstufe als Blockschaltbild, wobei die Wandlerstufe zwei DC/DC-Wandlereinrichtungen aufweist,
- Fig. 2c: eine schematische Darstellung einer DC/DC-Wandlerstufe als Blockschaltbild, wobei die Wandlerstufe n DC/DC-Wandlereinrichtungen aufweist,
- Fig. 3a: eine beispielhafte elektronische Schaltung einer unidirektionalen DC/DC-Wandlereinrichtung,
- Fig. 3b: eine beispielhafte elektronische Schaltung einer bidirektionalen DC/DC-Wandlereinrichtung,
- Fig. 3c: eine beispielhafte elektronische Schaltung einer Parallelschaltung von zwei DC/DC-Wandlereinrichtungen des in Fig. 3a beispielhaft dargestellten Typs,
- Fig. 4a - 4d: beispielhafte Steuerkennlinien für zwei unterschiedlich dimensionierte DC/DC-Wandlereinrichtungen und
- Fig. 5a - 5d: beispielhafte Steuerkennlinien für zwei gleich dimensionierte DC/DC-Wandlereinrichtungen.

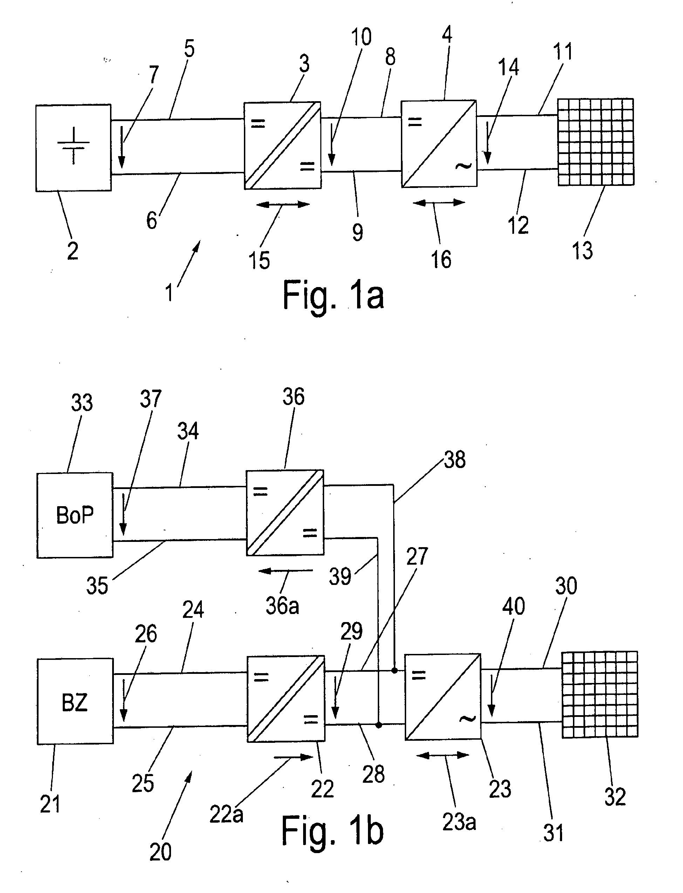

Fig. 1a zeigt eine erste Ausführungsform einer erfindungsgemäßen Vorrichtung 1 mit einem elektrochemischen Energieerzeuger, welcher elektrische Energie durch Umwandlung aus einer anderen Energieform erzeugt, oder elektrochemischen Speicher 2 (beispielsweise einer wieder aufladbaren Batterie oder einer Brennstoffzelle), einer DC/DC-Wandlerstufe 3 und einer DC/AC-Wandlerstufe 4.

Die Ausgangsklemmen des Energieerzeugers oder Speichers 2 sind über elektrische Leitungen 5 und 6 mit den Klemmen der Batterieseite der vorzugsweise bidirektional betreibbaren DC/DC-Wandlerstufe 3 verbunden. Zwischen den Leitungen 5 und 6 liegt die Ausgangsspannung des Energieerzeugers oder Speichers 2 an. Diese ist mit einem Spannungspfeil 7 bezeichnet. Die Zwischenkreisklemmen der DC/DC-Wandlerstufe 3 sind über elektrische Leitungen 8 und 9 mit den Klemmen der Gleichspannungsseite der vorzugsweise bidirektional betreibbaren DC/AC-Wandlerstufe 4 verbunden.

Der Bereich zwischen der DC/DC-Wandlerstufe 3 und der DC/AC-Wandlerstufe 4 wird auch als Zwischenkreis bezeichnet, dementsprechend wird die mit dem Spannungspfeil 10 symbolisierte Spannung auch als Zwischenkreisspannung bezeichnet.

Die Klemmen der AC-Seite der DC/AC-Wandlerstufe 4 sind über elektrische Leitungen 11 und 12 mit einem elektrischen Netz 13 (beispielsweise einem 230V, 50 Hz Spannungsversorgungsnetz) verbunden, dementsprechend liegt zwischen den Leitungen 11 und 12 eine mit dem Spannungspfeil 14 symbolisierte Netzspannung an. Die bevorzugte - aber nicht zwingende - bidirektionale Arbeitsweise der DC/DC-Wandlerstufe 3 und der DC/AC-Wandlerstufe 4 ist durch die Richtungspfeile 15 und 16 dargestellt.

Soll aus dem Speicher oder Energieerzeuger 2 gespeicherte oder mit diesem erzeugte elektrische Energie in das Netz 13 eingespeist werden, so wird die Batteriespannung 7 mittels der DC/DC-Wandlerstufe 3 auf das Zwischenkreisspannungsniveau 10 gewandelt. Anschließend wird die Zwischenkreisspannung 10 von der DC/AC-Wandlerstufe 4 auf das Netzspannungsniveau 14 gewandelt und in das Netz 13 eingespeist.

Soll hingegen elektrische Energie aus dem Netz 13 entnommen und in den Speicher 2 eingespeichert werden, so wird die Netzspannung 14 zunächst mittels der DC/AC-Wandlerstufe 4 auf Zwischenkreisspannungsniveau 10 gewandelt und anschließend mittels der DC/DC-Wandlerstufe 3 auf Batteriespannungsniveau 7 gewandelt. Diese Beschreibung der Funktionsweise ist stark vereinfacht, dem Fachmann sind die zu beachtenden Rahmenbedingungen jedoch bekannt.

Zur Ergänzung der Ausführungen in der vorliegenden Anmeldung wird auf die EP 1 956 703 A1 der Anmelderin verwiesen.

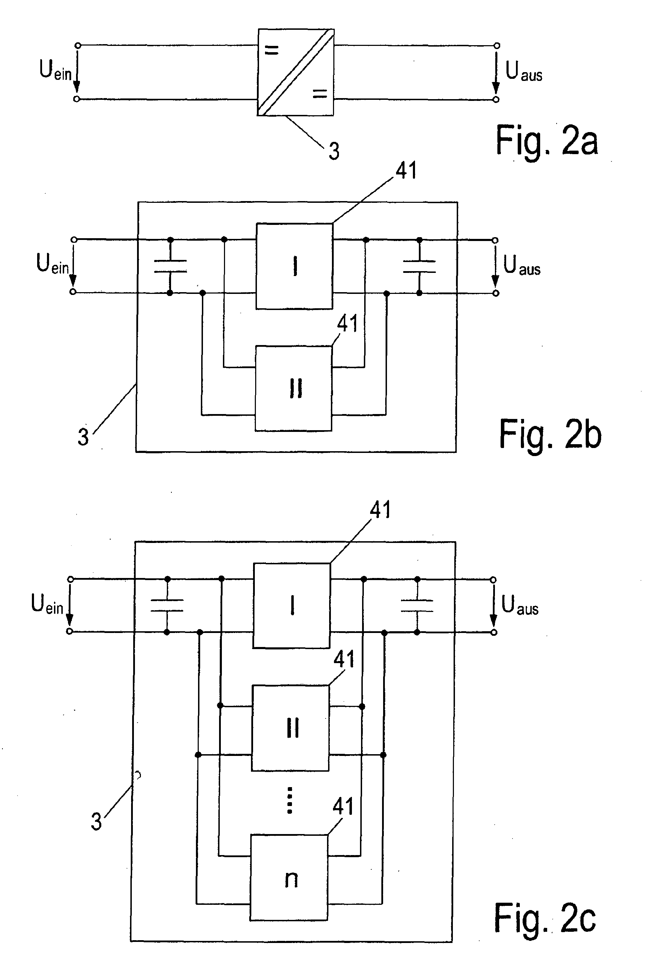

Erfindungsgemäß weist die DC/DC-Wandlerstufe 3 mehrere parallel geschaltete DC/DC-Wandlereinrichtungen auf. Die in Fig. 2a dargestellte DC/DC-Wandlerstufe 3 kann also wie in Fig. 2b dargestellt zwei, oder wie in Fig. 2c dargestellt, n DC/DC-Wandlereinrichtungen umfassen.

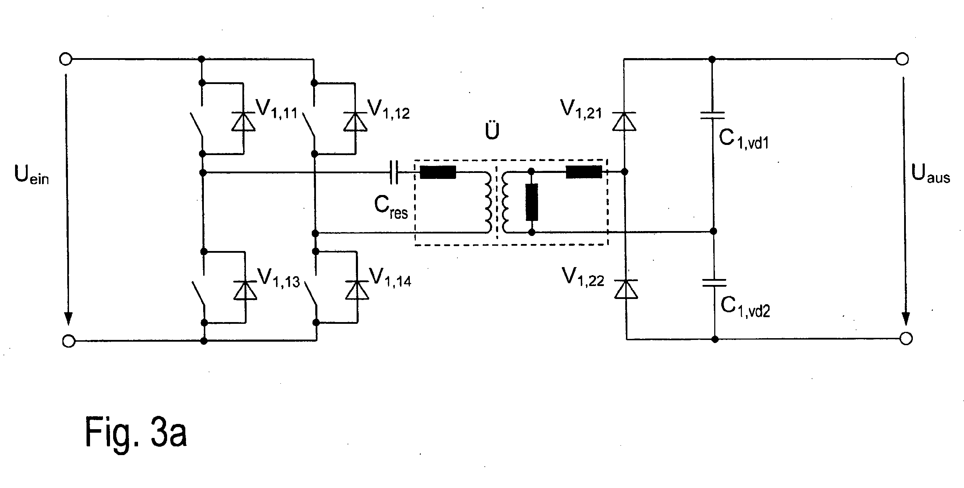

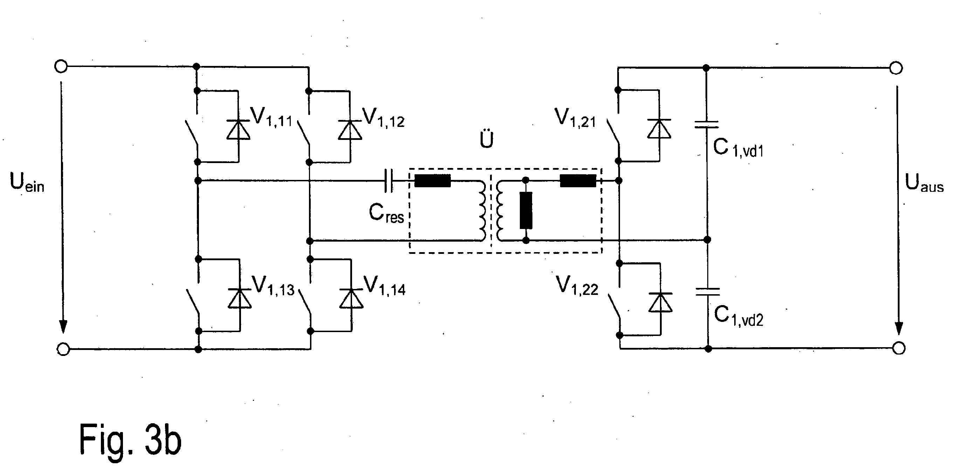

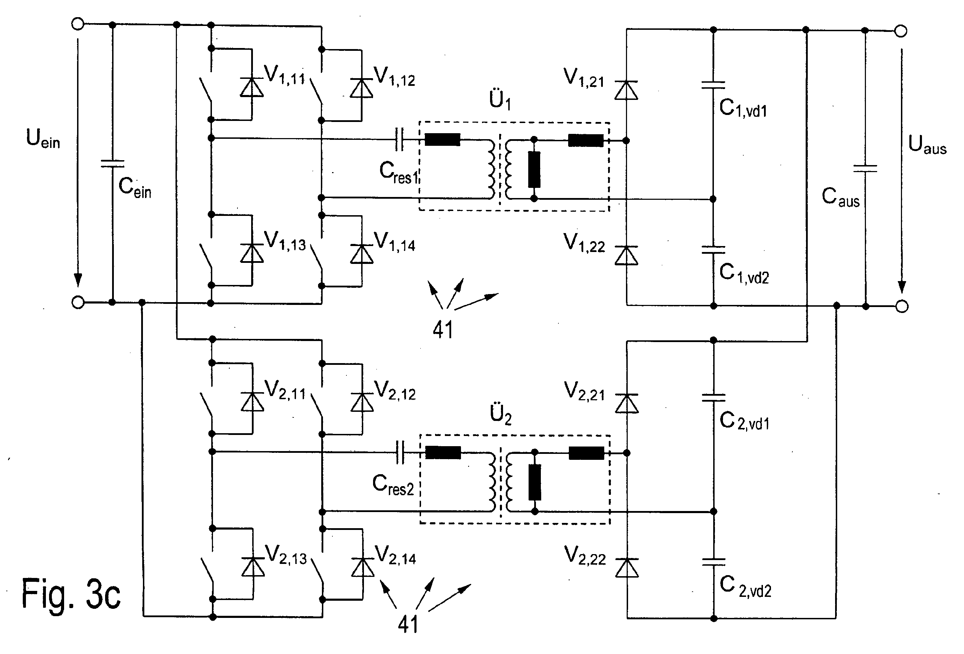

Eine beispielhafte Schaltung einer DC/DC-Wandlereinrichtung in unidirektionaler Auslegung ist in Fig. 3a dargestellt und eine beispielhafte Schaltung einer DC/DC-Wandlereinrichtung in bidirektionaler Auslegung ist in Fig. 3b dargestellt. Ferner zeigt Fig. 3c eine beispielhafte elektronische Schaltung einer Parallelschaltung von zwei DC/DC-Wandlereinrichtungen.

Die in den Fig. 3a und 3b sowie 3c gezeigten elektronischen Schaltungen dienen lediglich als Beispiel für DC/DC-Wandlereinrichtungen, die im Rahmen der vorliegenden Erfindung Verwendung finden können. Die Bauelemente der beispielhaften Schaltungen sind daher aus Gründen der Übersichtlichkeit nicht mit Bezugszeichen versehen, sondern lediglich mit den allgemein bekannten Bezeichnungen für ein jeweiliges Bauteil versehen (V für Ventil bzw. Leistungshalbleiter, C für Kondensator, Ü für Transformator usw.). Die DC/DC-Wandlereinrichtungen sind galvanisch trennend ausgeführt und weisen entsprechend einen Hochfrequenz-Transformator auf und sind sowohl in einer hart schaltenden als auch in einer resonant schaltenden Betriebsart, insbesondere auch "Zero Current Switching" (ZCS) und "Zero Voltage Switching" (ZVS) sowie Varianten dieser Betriebsarten, betreibbar. Der Aufbau und die grundsätzliche Funktionsweise der gezeigten Schaltungen sowie die zuvor genannten Betriebsarten sind dem Fachmann bekannt und bedürfen an dieser Stelle keiner weiteren Erläuterung.

Durch die Verwendung derartiger Schaltungen können - wenn sie in entsprechender Weise angesteuert werden - in vorteilhafter Weise die im Stand der Technik erforderlichen Hochsetzsteller/Tiefsetzsteller entfallen. Die Anzahl der Wandlerstufen wird damit reduziert, was eine Verringerung der Herstellungskosten und in der Regel eine Verbesserung des Wirkungsgrades zur Folge hat.

Die DC/DC-Wandlerstufe 3 kann mehrere (zwei oder mehr) DC/DC-Wandlereinrichtungen 41 aufweisen, die sich hinsichtlich einer Anzahl von eine DC/DC-Wandlereinrichtung charakterisierenden Kennwerten nicht unterscheiden, anders ausgedrückt kann die DC/DC-Wandlerstufe 3 mehrere DC/DC-Wandlereinrichtungen 41 aufweisen, die gleichartig dimensioniert bzw. ausgestaltet sind.

Die DC/DC-Wandlerstufe 3 kann weiterhin mehrere DC/DC-Wandlereinrichtungen 41 aufweisen, die sich hinsichtlich einer Anzahl von eine DC/DC-Wandlereinrichtung charakterisierenden Kennwerten unterscheiden, anders ausgedrückt kann die DC/DC-Wandlerstufe 3 mehrere DC/DC-Wandlereinrichtungen 41 aufweisen, die unterschiedlich dimensioniert bzw. ausgestaltet sind.

Eine DC/DC-Wandlereinrichtung wird beispielsweise durch einen oder mehrere folgender Kennwerte charakterisiert: ein Eingangsspannungsbereich, ein Ausgangsspannungsbereich, eine Nennleistung, eine minimale bzw. eine maximale Taktfrequenz und/oder ein minimales bzw. maximales Tastverhältnis.

Die DC/DC-Wandlereinrichtung kann in unterschiedlichen Betriebsarten betrieben werden.

Die Betriebsart einer DC/DC-Wandlereinrichtung kann durch Steuerparameter festgelegt werden. Diese können beispielsweise in einer nicht dargestellten Steuereinrichtung abgelegt werden, wobei die Steuereinrichtung die mehrere DC/DC-Wandlereinrichtungen entsprechend einer Anzahl von Steuerparametern ansteuert.

Die Steuerparameter betreffen: eine Taktfrequenz und ein Tastverhältnis der rechteckförmigen Pulsfolgen zum Öffnen und Schließen der Schalter bzw. Ventile einer DC/DC-Wandlereinrichtung. Weiterhin werden die Steuerparameter abhängig von einer Eingangsspannung und/oder einer zu übertragenden elektrischen Leistung geändert.

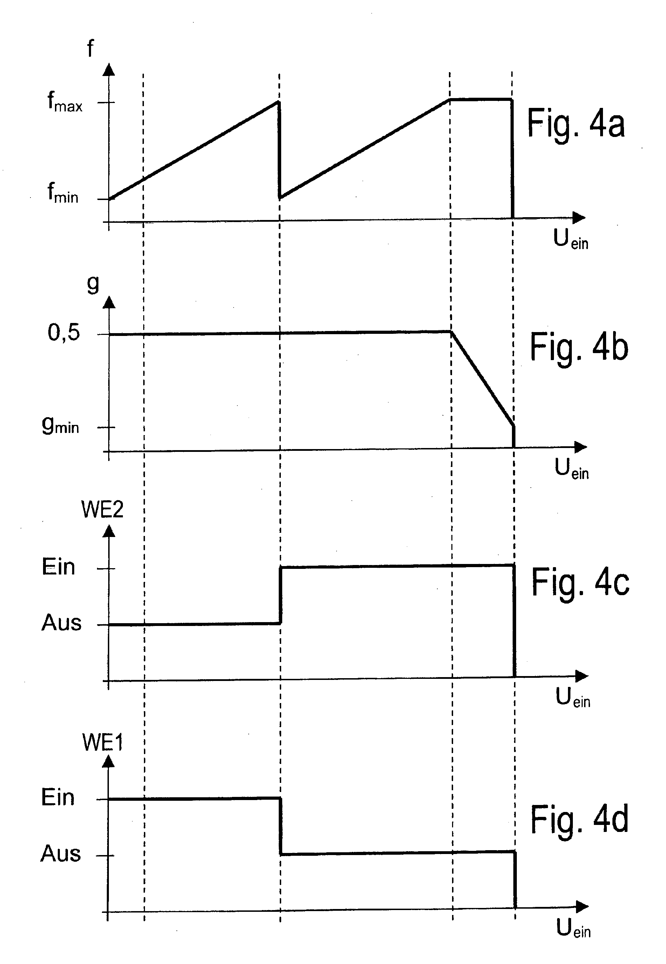

Wie bereits ausgeführt, kann eine Wandlerstufe 3 zwei unterschiedlich ausgestaltete bzw. dimensionierte DC/DC-Wandlereinrichtungen 41 aufweisen. Eine beispielhafte Ansteuerung von zwei unterschiedlich ausgestalteten bzw. dimensionierten DC/DC-Wandlereinrichtungen einer Wandlerstufe 3 ist in den Fig. 4a bis 4d beispielhaft in Abhängigkeit der Eingangsspannung Uₑᵢₙ der Wandlerstufe 3 dargestellt.

Insgesamt wird aus den Figuren 4a bis 4d deutlich, dass mit steigender Eingangsspannung Uₑᵢₙ zunächst die erste DC/DC-Wandlereinrichtung WE1 in Betrieb ist (Fig. 4d).

Die Taktfrequenz f der ersten DC/DC-Wandlereinrichtung wird mit der steigenden Eingangsspannung Uₑᵢₙ erhöht, hier bis zum Punkt der maximalen Taktfrequenz fₘₐₓ (Fig. 4a). Mit weiter steigender Eingangsspannung Uₑᵢₙ wird dann die erste DC/DC-Wandlereinrichtung WE1 ausgeschaltet (Fig. 4d) und die zweite DC/DC-Wandlereinrichtung WE2 eingeschaltet (Fig. 4c). Mit weiter steigender Eingangsspannung Uₑᵢₙ der Wandlerstufe wird die Taktfrequenz f der zweiten DC/DC-Wandlereinrichtung weiter - hier bis zur maximalen Taktfrequenz fₘₐₓ - erhöht (Fig. 4a). Steigt die Eingangsspannung weiter, so bleibt die Taktfrequenz bei dem dargestellten Beispiel konstant (Fig. 4a) und das Tastverhältnis g der zweiten DC/DC-Wandlereinrichtung wird mit weiter steigender Eingangsspannung Uₑᵢₙ von 0,5 auf das minimale Tastverhältnis gₘᵢₙ abgesenkt. Alternativ kann es u. U. auch sinnvoll sein, mit sinkender Aussteuerung g auch die Taktfrequenz zu senken.

Die erste DC/DC-Wandlereinrichtung deckt im dargestellten Beispiel den unteren Bereich der Eingangsspannung Uₑᵢₙ ab während die zweite DC/DC-Wandlereinrichtung den oberen Bereich der Eingangsspannung Uₑᵢₙ abdeckt.

Auf diese Weise wird der erfindungsgemäße große Eingangsspannungsbereich einer Wandlerstufe 3 erreicht, die zwei unterschiedlich ausgestaltete bzw. dimensionierte DC/DC-Wandlereinrichtungen aufweist.

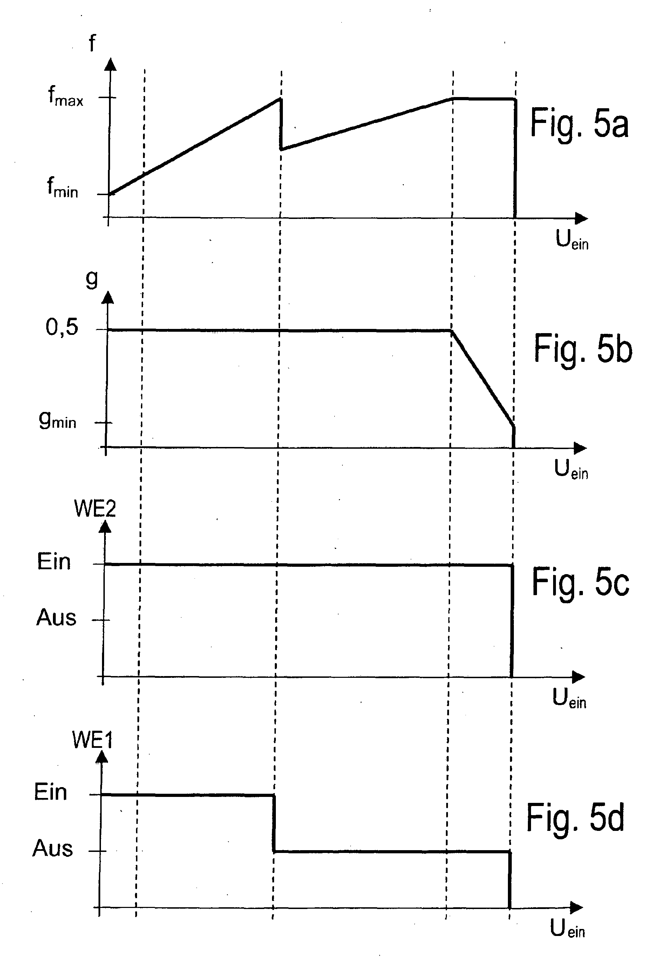

Wie ebenfalls bereits ausgeführt, kann eine Wandlerstufe 3 zwei gleichartig ausgestaltete bzw. dimensionierte DC/DC-Wandlereinrichtungen 41 aufweisen. Eine beispielhafte Ansteuerung von zwei gleichartig ausgestalteten bzw. dimensionierten DC/DC-Wandlereinrichtungen einer Wandlerstufe 3 ist in den Fig. 5a bis 5d beispielhaft in Abhängigkeit der Eingangsspannung Uₑᵢₙ der Wandlerstufe 3 dargestellt.

Aus den Fig. 5a bis 5d ist ersichtlich, dass in einem niedrigen Eingangsspannungsbereich beide DC/DC-Wandlereinrichtungen WE1 und WE2 aktiv sind (Fig. 5c und 5d) und mit zunehmender Eingangsspannung Uₑᵢₙ mit einer zunehmenden Taktfrequenz f (Fig. 5a) angesteuert werden. Ist eine bestimmte Taktfrequenz - hier die maximale Taktfrequenz fₘₐₓ - erreicht, so wird die erste DC/DC-Wandlereinrichtung WE1 abgeschaltet (Fig. 5d) und vorzugsweise wird die Taktfrequenz f beim Abschalten wieder auf einen kleineren Wert gesetzt. Die zweite DC/DC-Wandlereinrichtung WE2 bleibt in Betrieb (Fig. 5c) und wird wiederum mit einer mit der steigenden Eingangsspannung Uₑᵢₙ steigenden Taktfrequenz f - hier bis zum Erreichen der maximalen Taktfrequenz fₘₐₓ (Fig. 5a) - angesteuert. Mit dem Erreichen der vorzugsweise maximalen Taktfrequenz fₘₐₓ wird bei weiter steigender Eingangsspannung Uₑᵢₙ das Tastverhältnis g von 0,5 bis zum minimalen Tastverhältnis gₘᵢₙ reduziert (Fig. 5b).

Auf diese Weise wird der erfindungsgemäße große Eingangsspannungsbereich einer Wandlerstufe 3 erreicht, die zwei gleichartig ausgestaltete bzw. dimensionierte DC/DC-Wandlereinrichtungen aufweist.

In Fig. 1b ist eine weitere Ausführungsform der Erfindung dargestellt. Eine weitere erfindungsgemäße Vorrichtung 20 weist einen Energieerzeuger, beispielsweise eine Brennstoffzelle 21, eine DC/DC-Wandlerstufe 22 (unidirektional, vgl. Pfeil 22a) und eine DC/AC-Wandlerstufe 23 (bidirektional, vgl. Pfeil 23a) auf. Die Ausgangsklemmen der Brennstoffzelle 21 sind über elektrische Leitungen 24 und 25 mit den Klemmen der Brennstoffzellenseite der DC/DC-Wandlerstufe 22 verbunden. Zwischen den Leitungen 24 und 25 liegt eine mit dem Spannungspfeil 26 symbolisierte Brennstoffzellenspannung an.

Die Zwischenkreisklemmen der DC/DC-Wandlerstufe 22 sind über elektrische Leitungen 27 und 28 mit den Zwischenkreisklemmen der DC/AC-Wandlerstufe 23 verbunden. Zwischen den Leitungen 27 und 28 liegt eine mit dem Spannungspfeil 29 symbolisierte Zwischenkreisspannung an. Über elektrische Leitungen 30 und 31 sind die AC Klemmen der DC/AC-Wandlerstufe 23 mit einem Netz 32 (beispielsweise einem 230V, 50 Hz Spannungsversorgungsnetz) verbunden. Zwischen den Leitungen 30 und 31 liegt eine mit dem Spannungspfeil 40 symbolisierte Netzspannung an.

Weiterhin weist die Vorrichtung 20 eine als Block 33 dargestellte Anlagenperipherie (BoP) auf, diese ist zum Betrieb der Brennstoffzelle erforderlich und benötigt elektrische Energie. Über elektrische Leitungen 34 und 35 ist die Anlagenperipherie 33 der Brennstoffzelle 21 mit den Ausgangsklemmen der DC/DC-Wandlerstufe 36 verbunden (unidirektional, vgl. Pfeil 36a). Zwischen den Leitungen 34 und 35 liegt eine mittels des Spannungspfeils 37 symbolisierte Versorgungsspannung für die Anlagenperipherie 33 an.

Die Eingangsklemmen der DC/DC-Wandlerstufe 36 sind nach einer Weiterbildung, aber auch unabhängig zu betrachtenden Variante über elektrische Leitungen 38 und 39 mit dem Zwischenkreis der Vorrichtung 20 verbunden. Der Abgriff der für die Versorgung der Anlagenperipherie erforderlichen Spannung erfolgt also direkt auf dem Zwischenkreis und muss nicht wie im Stand der Technik zunächst über Hochsetz/Tiefsetzsteller angepasst werden.

Die Wandlerstufen 22 und 36 können analog der in der ersten Ausführungsform beschriebenen Wandlerstufe 3 angesteuert und ausgeführt sein, auf diese Weise sind auch in der Vorrichtung 20 bislang erforderliche Hochsetzsteller/Tiefsetzsteller nicht mehr erforderlich.

### Bezugszeichen

- Vorrichtung: 1
- Speicher: 2
- Wandlerstufe: 3
- Wandlerstufe: 4
- Leitung: 5
- Leitung: 6
- Spannungspfeil: 7
- Leitung: 8
- Leitung: 9
- Spannungspfeil: 10
- Leitung: 11
- Leitung: 12
- elektrisches Netz: 13
- Spannungspfeil: 14
- Richtungspfeil: 15
- Richtungspfeil: 16
- Vorrichtung: 20
- Brennstoffzelle: 21
- Wandlerstufe: 22
- Richtungspfeil: 22a
- Wandlerstufe: 23
- Richtungspfeil: 23a
- Leitung: 24
- Leitung: 25
- Spannungspfeil: 26
- Leitung: 27
- Leitung: 28
- Spannungspfeil: 29
- Leitung: 30
- Leitung: 31
- Netz: 32
- Anlagenperipherie: 33
- Leitung: 34
- Leitung: 35
- Wandlerstufe: 36
- Richtungspfeil: 36a
- Spannungspfeil: 37
- Leitung: 38
- Leitung: 39
- Wandlereinrichtung: 41

## Patentansprüche

1. Vorrichtung zur Umwandlung von Gleichspannung aus einem elektrochemischen Speicher (2) oder einer Brennstoffzelle (21) in Wechselspannung, insbesondere zur Einspeisung in ein Versorgungsnetz (13, 32), mit einem zweistufigen Aufbau mit
i. einer einzigen DC/DC-Wandlerstufe (3, 22) zur Erzeugung einer Zwischenkreisspannung aus der Ausgangsspannung des elektrochemischen Speichers (2) oder der Brennstoffzelle (21), die derart ausgelegt ist und ansteuerbar ist, dass sie Gleichspannung in einem weiten Eingangsspannungsbereich direkt auf die Zwischenkreisspannung umsetzt, insbesondere anhebt, mit welcher eine einzige DC-/AC-Wandlerstufe (4, 23) zur Erzeugung der Wechselspannung betreibbar ist, wobei die DC/DC-Wandlerstufe (3,22) eine DC/DC-Wandlereinrichtung (41) aufweist, die galvanisch trennend ausgeführt ist und einen Hochfrequenz-Transformator aufweist und eine Steuereinrichtung, welche die DC/DC-Wandlereinrichtung (41) mit Steuerparametern ansteuert, und
ii. der DC/AC-Wandlerstufe (4, 23) zur Erzeugung der Wechselspannung aus der Zwischenkreisspannung, wobei
iii. die DC/DC-Wandlerstufe (3,22) zwei oder mehr parallel geschaltete DC/DC-Wandlereinrichtungen (41) aufweist, die galvanisch trennend ausgeführt sind und jeweils einen Hochfrequenz-Transformator aufweisen, und
iv. die Steuereinrichtung die zwei oder mehr parallel geschalteten DC/DC-Wandlereinrichtungen (41) mit abhängig von einer Eingangsspannung Uₑᵢₙ der Wandlerstufe und/oder einer zu übertragenden elektrischen Leistung variierenden Steuerparametern ansteuert, welche betreffen: eine Taktfrequenz und/oder ein Tastverhältnis von rechteckförmigen Pulsfolgen zum Öffnen und Schließen von Schaltern der DC/DC-Wandlereinrichtung, **dadurch gekennzeichnet, dass**
v. die Steuereinrichtung die zwei oder mehr parallel geschalteten DC-DC- Wandlereinrichtungen individuell unterschiedlich ansteuert.

2. Vorrichtung nach Anspruch 1, **dadurch gekennzeichnet, dass** die zwei oder mehr parallel geschalteten DC/DC-Wandlereinrichtungen (41) gleich hinsichtlich einem oder mehrerer folgender charakterisierender Kennwerte ausgelegt sind: Eingangsspannungsbereich, Ausgangsspannungsbereich, Nennleistung, maximale Taktfrequenz, minimale Taktfrequenz, minimales Tastverhältnis, maximales Tastverhältnis.

3. Vorrichtung nach Anspruch 1 oder 2, **dadurch gekennzeichnet, dass** die zwei oder mehr parallel geschalteten DC/DC-Wandlereinrichtungen (41) unterschiedlich hinsichtlich einem oder mehrerer folgender charakterisierender Kennwerte ausgelegt sind: Eingangsspannungsbereich, Ausgangsspannungsbereich, Nennleistung, maximale Taktfrequenz, minimale Taktfrequenz, minimales Tastverhältnis, maximales Tastverhältnis.

4. Vorrichtung nach einem der vorstehenden Ansprüche, **dadurch gekennzeichnet, dass** die DC/DC-Wandlereinrichtung (41) sowohl in einer hart schaltenden als auch in einer resonant schaltenden Betriebsart, insbesondere auch "Zero Current Switching" (ZCS) und "Zero Voltage Switching" (ZVS) sowie Varianten dieser Betriebsarten, betreibbar ist.

5. Vorrichtung einem der vorstehenden Ansprüche, **dadurch gekennzeichnet, dass** die zwei oder mehr parallel geschalteten DC/DC-Wandlereinrichtungen (41) mit unterschiedlichen Steuerparametern ansteuerbar sind.

6. Vorrichtung nach einem der vorstehenden Ansprüche, **dadurch gekennzeichnet, dass** die DC/DC-Wandlerstufe derart ausgelegt ist, dass sie Gleichspannung in einem weiten Eingangsspannungsbereich von 1:2 bis 1:3 direkt auf die Zwischenkreisspannung umsetzt.

7. Vorrichtung nach einem der vorstehenden Ansprüche, **dadurch gekennzeichnet, dass** eine weitere DC/DC-Wandlerstufe (36) zur Erzeugung einer Versorgungsspannung für die Brennstoffzelle oder eine Anlagenperipherie, über einen Zwischenkreisabgriff vorgesehen ist.

8. Verfahren zum Ansteuern einer Vorrichtung zur Umwandlung von Gleichspannung aus einem elektrochemischen Speicher (2) oder einer Brennstoffzelle in Wechselspannung zur Einspeisung in ein Versorgungsnetz, wobei die Wechselspannung durch eine DC-AC-Wandlerstufe erzeugt wird, insbesondere Verfahren zum Ansteuern einer Vorrichtung nach einem oder mehreren der vorstehenden Ansprüche, wobei die in der Vorrichtung enthaltene DC/DC-Wandlerstufe (3, 22) zwei oder mehr parallel geschaltete DC/DC-Wandlereinrichtungen (41) aufweist, wobei die zwei oder mehr parallel geschalteten DC/DC-Wandlereinrichtungen (41) mit abhängig von einer Eingangsspannung Uₑᵢₙ der Wandlerstufe und/oder einer zu übertragenden elektrischen Leistung variierenden Steuerparametern individuell unterschiedlich angesteuert werden, wobei als die variierenden Steuerparameter eine Taktfrequenz und/oder ein Tastverhältnis von rechteckförmigen Pulsfolgen zum Öffnen und Schließen von Schaltern der DC/DC-Wandlereinrichtung verwendet werden.

9. Verfahren nach Anspruch 8, **dadurch gekennzeichnet, dass** von zwei unterschiedlich ausgestalteten DC/DC-Wandlereinrichtungen (41) einer Wandlerstufe (3, 22) in Abhängigkeit von der Eingangsspannung (Uₑᵢₙ) der Wandlerstufe (3) mit steigender Eingangsspannung Uₑᵢₙ zunächst die erste DC/DC-Wandlereinrichtung (41) in Betrieb ist, wobei die Taktfrequenz der ersten DC/DC-Wandlereinrichtung (41) mit der steigenden Eingangsspannung bis zum Punkt einer maximalen Taktfrequenz fₘₐₓ erhöht wird, und wobei mit weiter steigender Eingangsspannung Uₑᵢₙ die erste DC/DC-Wandlereinrichtung ausgeschaltet und die zweite DC/DC-Wandlereinrichtung eingeschaltet wird, wobei die Taktfrequenz der zweiten DC/DC-Wandlereinrichtung weiter bis zu einer maximalen Taktfrequenz erhöht wird.

10. Verfahren nach Anspruch 8, **dadurch gekennzeichnet, dass** zwei gleichartig ausgestaltete DC/DC-Wandlereinrichtungen (41) derart angesteuert werden, dass in einem niedrigen Eingangsspannungsbereich beide DC/DC-Wandlereinrichtungen aktiv sind und dass sie mit zunehmender Eingangsspannung Uₑᵢₙ mit einer zunehmenden Taktfrequenz angesteuert werden und dass beim Erreichen einer maximalen Taktfrequenz fₘₐₓ die erste DC/DC-Wandlereinrichtung abgeschaltet wird und die zweite DC/DC-Wandlereinrichtung in Betrieb bleibt und mit einer mit der steigenden Eingangsspannung Uₑᵢₙ steigenden Taktfrequenz bis zum Erreichen einer maximalen Taktfrequenz angesteuert wird.

11. Verfahren nach Anspruch 9 oder 10, **dadurch gekennzeichnet, dass** mit nochmals weiter steigender Eingangsspannung, insbesondere nach Erreichen der maximalen Taktfrequenz fₘₐₓ der zweiten DC/DC-Wandlereinrichtung, die Taktfrequenz konstant gehalten wird oder gesenkt wird und das Tastverhältnis der zweiten DC/DC-Wandlereinrichtung mit weiter steigender Eingangsspannung Uₑᵢₙ abgesenkt wird.

## Claims

1. A device for converting DC voltage from an electrochemical store (2) or a fuel cell (21) into an AC voltage, in particular for feeding to a power supply system (13, 32), having a two-stage design with
i. a single DC-to-DC converter stage (3, 22) for generating an intermediate circuit voltage from the output voltage of the electrochemical store (2) or the fuel cell (21), said single DC-to-DC converter stage being designed and drivable in such a way that it converts, in particular steps up, a DC voltage in a wide input voltage range directly into the intermediate circuit voltage, with which a single DC-to-AC converter stage (4, 23) for generating the AC voltage can be operated, the DC-to-DC converter stage (3, 22) having a DC-to-DC converter device (41), which is configured to be galvanically isolating and has a high-frequency transformer and a control device which drives the DC-to-DC converter device (41) with control parameters, and
ii. the DC-to-AC converter stage (4, 23) for generating the AC voltage from the intermediate circuit voltage, wherein
iii. the DC-to-DC converter stage (3, 22) has two or more DC-to-DC converter devices (41) which are connected in parallel, are configured to be galvanically isolating and each have a high-frequency transformer, and
iv. the control device drives the two or more DC-to-DC converter devices (41) connected in parallel with control parameters which vary depending on an input voltage Uᵢₙ of the converter stage and/or an electrical power to be transmitted, which control parameters relate to: a clock frequency and/or a duty factor of square-wave pulse sequences for opening and closing switches of the DC-to-DC converter device, **characterized in that**
v. the control device drives the two or more DC-to-DC converter devices (41) connected in parallel individually and differently.

2. The device as claimed in claim 1, **characterized in that** the two or more DC-to-DC converter devices (41) connected in parallel have an identical design in respect of one or more of the following characterizing characteristic values: input voltage range, output voltage range, rated power, maximum clock frequency, minimum clock frequency, minimum duty factor, maximum duty factor.

3. The device as claimed in claim 1 or 2, **characterized in that** the two or more DC-to-DC converter devices (41) connected in parallel have a different design in respect of one or more of the following characterizing characteristic values: input voltage range, output voltage range, rated power, maximum clock frequency, minimum clock frequency, minimum duty factor, maximum duty factor.

4. The device as claimed in one of the preceding claims, **characterized in that** the DC-to-DC converter device (41) can be operated both in a hard-switching and in a resonant-switching operating mode, in particular also zero current switching (ZCS) and zero voltage switching (ZVS) and variants of these operating modes.

5. The device as claimed in one of the preceding claims, **characterized in that** the two or more DC-to-DC converter devices (41) connected in parallel can be driven by different control parameters.

6. The device as claimed in one of the preceding claims, **characterized in that** the DC-to-DC converter stage is designed in such a way that it converts a DC voltage in a wide input voltage range of 1:2 to 1:3 directly into the intermediate circuit voltage.

7. The device as claimed in one of the preceding claims, **characterized in that** a further DC-to-DC converter stage (36) for generating a supply voltage for the fuel cell or a system peripheral, via an intermediate circuit tap, is provided.

8. A method for driving an apparatus for converting a DC voltage from an electrochemical store (2) or a fuel cell into an AC voltage for feeding a power supply system, wherein the AC voltage is generated by a DC-to-AC converter stage, in particular a method for driving a device as claimed in one or more of the preceding claims, wherein the DC-to-DC converter stage (3, 22) contained in the device has two or more DC-to-DC converter devices (41) connected in parallel, wherein the two or more DC-to-DC converter devices (41) connected in parallel are driven individually and differently with control parameters which vary depending on an input voltage Uᵢₙ of the converter stage and/or an electrical power to be transmitted, wherein the varying control parameters used are a clock frequency and/or a duty factor of square-wave pulse sequences for opening and closing switches of the DC-to-DC converter device.

9. The method as claimed in claim 8, **characterized in that** of two differently configured DC-to-DC converter devices (41) of a converter stage (3, 22), depending on the input voltage (Uᵢₙ) of the converter stage (3) with an increasing input voltage Uᵢₙ, first the first DC-to-DC converter device (41) is in operation, with the clock frequency of the first DC-to-DC converter device (41) being increased as the input voltage increases until the point of a maximum clock frequency fₘₐₓ, and with a further increasing input voltage Uᵢₙ, the first DC-to-DC converter device being switched off and the second DC-to-DC converter device being switched on, with the clock frequency of the second DC-to-DC converter device being increased further up to a maximum clock frequency.

10. The method as claimed in claim 8, **characterized in that** two identically configured DC-to-DC converter devices (41) are driven in such a way that, in a low input voltage range, both DC-to-DC converter devices are active and that they are driven with an increasing input voltage Uᵢₙ with an increasing clock frequency, and that when a maximum clock frequency fₘₐₓ is reached, the first DC-to-DC converter device is disconnected and the second DC-to-DC converter device remains in operation and is driven at a clock frequency which increases with the increasing input voltage Uᵢₙ until a maximum clock frequency is reached.

11. The method as claimed in claim 9 or 10, **characterized in that** as the input voltage increases further still, in particular once the maximum clock frequency fₘₐₓ of the second DC-to-DC converter device has been reached, the clock frequency is kept constant or reduced, and the duty factor of the second DC-to-DC converter device is reduced as the input voltage Uᵢₙ increases further.

## Revendications

1. Dispositif pour la conversion d'une tension continue en provenance d'un accumulateur électrochimique (2) ou en provenance d'une pile à combustible (21) en une tension alternative, en particulier pour l'alimentation dans un réseau d'approvisionnement (13, 32), présentant une structure biétagée comprenant :
i. un seul étage de conversion CC/CC (3, 22) pour la production d'une tension de circuit intermédiaire à partir de la tension de sortie de l'accumulateur électrochimique (2) ou de la pile à combustible (21), ledit étage de conversion est configuré et est commandable de telle manière qu'il convertit, en particulier qu'il amplifie, la tension continue, dans une large plage de tension d'entrée, directement en la tension de circuit intermédiaire, avec laquelle un seul étage de conversion CC/CA (4, 23) est apte à fonctionner pour la production de la tension alternative, sachant que l'étage de conversion CC/CC (3, 22) présente un dispositif convertisseur CC/CC (41), qui est réalisé avec une séparation galvanique et qui présente un transformateur haute fréquence, et un dispositif de commande, le dispositif de commande le dispositif convertisseur CC/CC (41) à l'aide de paramètres de commande, et
ii. l'étage de conversion CC/CA (4, 23) pour la production de la tension alternative à partir de la tension de circuit intermédiaire, sachant
iii. que l'étage de conversion CC/CC (3, 22) présente deux ou plus dispositifs convertisseurs CC/CC (41) branchés en parallèle, lesquels sont réalisés avec une séparation galvanique et présentent chacun un transformateur haute fréquence, et
iv. que le dispositif de commande commande les deux ou plus dispositifs convertisseurs CC/CC (41) branchés en parallèle à l'aide de paramètres de commande variant en fonction d'une tension d'entrée U_{entrée} de l'étage de conversion et/ou d'une puissance électrique à transmettre, lesdits paramètres de commande concernant : une fréquence d'horloge et/ou un taux d'impulsions de séquences d'impulsions rectangulaires pour l'ouverture et la fermeture des commutateurs du dispositif convertisseur CC/CC, **caractérisé en ce que**
v. le dispositif de commande, commande de manière différente et individuelle les deux ou plus dispositifs convertisseurs CC/CC branchés en parallèle.

2. Dispositif selon la revendication 1, **caractérisé en ce que** les deux ou plus dispositifs convertisseurs CC/CC (41) branchés en parallèle présentent une même configuration concernant une ou plusieurs valeurs caractéristiques qui suivent : plage de tension d'entrée, plage de tension de sortie, puissance nominale, fréquence d'horloge maximale, fréquence d'horloge minimale, taux d'impulsions minimal, taux d'impulsions maximal.

3. Dispositif selon la revendication 1 ou 2, **caractérisé en ce que** les deux ou plus dispositifs convertisseurs CC/CC (41) branchés en parallèle présentent une configuration différente concernant une ou plusieurs valeurs caractéristiques qui suivent : plage de tension d'entrée, plage de tension de sortie, puissance nominale, fréquence d'horloge maximale, fréquence d'horloge minimale, taux d'impulsions minimal, taux d'impulsions maximal.

4. Dispositif selon l'une quelconque des revendications précédentes, **caractérisé en ce que** le dispositif convertisseur CC/CC (41) est apte à fonctionner aussi bien dans un mode de fonctionnement à commutation dure que dans un mode de fonctionnement à commutation à résonance, en particulier également dans un mode ZCS Commutation de courant nul (ZCS) et dans un mode Commutation de tension nulle (ZVS) ainsi que dans des variantes desdits modes de fonctionnement.

5. Dispositif selon l'une quelconque des revendications précédentes, **caractérisé en ce que** les deux ou plus dispositifs convertisseurs CC/CC (41) branchés en parallèle peuvent être commandés à l'aide de différents paramètres de commande.

6. Dispositif selon l'une quelconque des revendications précédentes, **caractérisé en ce que** l'étage de conversion CC/CC est configuré de telle manière qu'il convertit la tension continue, dans une large plage de tension d'entrée allant de 1:2 à 1:3, directement en la tension de circuit intermédiaire.

7. Dispositif selon l'une quelconque des revendications précédentes, **caractérisé en ce qu'**un autre étage de conversion CC/CC (36) est prévu pour la production d'une tension d'alimentation destinée à la pile à combustible ou à un équipement périphérique, sur un circuit intermédiaire.

8. Procédé pour la commande d'un dispositif de conversion de tension continue en provenance d'un accumulateur électrochimique (2) ou d'une pile à combustible en une tension alternative destinée à alimenter dans un réseau d'approvisionnement, sachant que la tension alternative est produite par un étage de conversion CC/CA, en particulier procédé pour la commande d'un dispositif selon l'une quelconque ou plusieurs des revendications précédentes, sachant que l'étage de conversion CC/CC (3, 22) compris dans le dispositif présente deux ou plus dispositifs convertisseurs CC/CC (41) branchés en parallèle, sachant que les deux ou plus dispositifs convertisseurs CC/CC (41) branchés en parallèle sont commandés de manière différente et individuelle à l'aide de paramètres de commande variant en fonction d'une tension d'entrée U_{entrée} de l'étage de conversion et/ou d'une puissance électrique à transmettre, sachant qu'on utilise au titre des paramètres de commande variables une fréquence d'horloge et/ou un taux d'impulsions de séquences d'impulsions rectangulaires pour l'ouverture et la fermeture des commutateurs du dispositif convertisseur CC/CC.

9. Procédé selon la revendication 8, **caractérisé en ce qu'**au début, le premier dispositif convertisseur CC/CC (41) parmi deux dispositifs convertisseurs CC/CC (41) différents, d'un étage de conversion (3, 22) fonctionne en fonction de la tension d'entrée (U_{entrée}) de l'étage de conversion (3) avec une tension d'entrée U_{entrée} en augmentation, sachant que la fréquence d'horloge du premier dispositif convertisseur CC/CC (41) est amplifiée avec la tension d'entrée en augmentation jusqu'à atteindre un point d'une fréquence d'horloge maximale fₘₐₓ, et sachant qu'avec une tension d'entrée U_{entrée} en augmentation continue, le premier dispositif convertisseur CC/CC est désactivé et le deuxième dispositif convertisseur CC/CC est activé, sachant que la fréquence d'horloge du deuxième dispositif convertisseur CC/CC est amplifiée encore jusqu'à atteindre une fréquence d'horloge maximale.

10. Procédé selon la revendication 8, **caractérisé en ce que** deux dispositifs convertisseurs CC/CC (41) de même une configuration sont commandés de telle manière que dans une plage de tension d'entrée basse, les deux dispositifs convertisseurs CC/CC sont actifs, et **en ce qu'**ils sont commandés avec une tension d'entrée U_{entrée} en augmentation avec une fréquence d'horloge en augmentation, et **en ce qu'**une fois la fréquence d'horloge maximale fₘₐₓ atteinte, le premier dispositif convertisseur CC/CC est désactivé et le deuxième dispositif convertisseur CC/CC reste en fonctionnement et est commandé avec une fréquence d'horloge augmentant avec la tension d'entrée U_{entrée} augmentant jusqu'à atteindre une fréquence d'horloge maximale.

11. Procédé selon la revendication 9 ou 10, **caractérisé en ce que** la fréquence d'horloge est maintenue constante ou est abaissée avec la tension d'entrée en augmentation continue, en particulier une fois la fréquence d'horloge maximale fₘₐₓ du deuxième dispositif convertisseur CC/CC atteinte, et **en ce que** le taux d'impulsions du deuxième dispositif convertisseur CC/CC est abaissé avec la tension d'entrée U_{entrée} en augmentation continue.
